Europäisches Patentamt

European Patent Office

Office européen des brevets

(19)

(11) Veröffentlichungsnummer: **0 121 754**
**B1**

(12) **EUROPÄISCHE PATENTSCHRIFT**

(45) Veröffentlichungstag der Patentschrift:
27.12.89

(51) Int. Cl.⁴: **C 08 F 10/02,** C 08 F 4/34

(21) Anmeldenummer: **84102357.5**

(22) Anmeldetag: **05.03.84**

(54) Verfahren zur Herstellung von Ethylenpolymerisaten bei Drücken oberhalb von 500 bar in einem Einzonen-Rohrreaktor.

(30) Priorität: **12.03.83 DE 3308805**

(43) Veröffentlichungstag der Anmeldung:
**17.10.84 Patentblatt 84/42**

(45) Bekanntmachung des Hinweises auf die Patenterteilung:
**27.12.89 Patentblatt 89/52**

(84) Benannte Vertragsstaaten:
**AT BE DE FR GB NL**

(56) Entgegenhaltungen:
**DE-A-1 943 698**
**DE-A-2 558 266**
**FR-A-2 335 531**

(73) Patentinhaber: **BASF Aktiengesellschaft, Carl-Bosch- Strasse 38, D-6700 Ludwigshafen (DE)**

(72) Erfinder: **Brandstetter, Franz, Dr., Ritterbueschel 45, D-6730 Neustadt (DE)**
Erfinder: **Werner, Michael, Dr., c/o Pharma Natura P.O. Box 5502, 2000 Johannesburg (ZA)**
Erfinder: **Boettcher, Klaus, Dr., Hubertusstrasse 57, D-5047 Wesseling (DE)**
Erfinder: **Siebenhandl, Hans Werner, Am Kuckucksbusch 1, D-5357 Swisttal 1 (DE)**

## Beschreibung

Die Erfindung betrifft ein Verfahren zur Herstellung von Ethylenpolymerisaten durch Homopolymerisation von Ethylen oder Copolymerisation von Ethylen mit Ethylen copolymerisierbaren Verbindungen in einem kontinuierlich betriebenen Polymerisationssystem, bestehend einem aus Einzonen-Rohrreaktor, bei Drücken von 500 bis 5 000 bar und Temperaturen von 40 bis 450°C in Gegenwart von radikalisch zerfallenden Polymerisationsinitiatoren, indem man dem Polymerisationssystem an dessen Einlaßstelle ein Gemisch aus Ethylen, Sauerstoff, 5 bis 15 mol ppm, bezogen auf das Ethylen, tert.-Butylperoxypivalat, gegebenenfalls Regler und gegebenenfalls Comonomer und zusätzlich an einer zweiten Stelle hinter der Einlaßstelle entlang des Polymerisationssystems, an der die Temperatur der Polymerisationsreaktion bereits das Maximum überschritten hat, einen anderen radikalisch zerfallenden Polymerisationsinitiator zuführt.

Bei derartigen Verfahren sind Maßnahmen erforderlich, die Eigenschaften der durch Hochdruckpolymerisation entstehenden Ethylenpolymerisate durch Veränderung der Polymerisationsbedingungen zu variieren. Hierzu können in kontinuierlich arbeitenden Rohrreaktoren die im Reaktor herrschenden Temperaturen durch die Zuführbedingungen der Polymerisationsinitiatoren eingestellt werden.

Es ist bekannt Ethylenpolymerisate bzw. Copolymerisate von Ethylen mit ethylencopolymerisierbaren Verbindungen in einem kontinuierlich betriebenen, rohrförmigen Polymerisationssystem unter Hochdruckbedingungen in Anwesenheit von Kettenübertragungsmitteln und Initiatoren herzustellen, indem man die Polymerisation in Anwesenheit einer Kombination von Initiatoren, die aus molekularem Sauerstoff, wenigstens einem organischen, in freie Radikale zerfallenden Initiator, z. B. tert.-Butylperoxypivalat, und wenigstens einem zweiten organischen, in freie Radikale zerfallenden Initiierungsmittel besteht, durchführt. Das Reaktionssystem wird hierbei auf etwa 230 bis 260°C abgekühlt, bevor man das Polymerisat und das nicht umgesetzte Monomer aus dem Abflußende des Reaktionsrohres abfließen läßt. Erfolgt eine weitere Beschickung des Reaktionsrohres mit Initiierungsmittel hinter der Einlaßstelle (A), so wird das Reaktionssystem auf 150 bis 230°C abgekühlt. Nach diesem Verfahren können zwar hohe Umsätze von Ethylen zu Polyethylen erzielt werden, jedoch sind die Folieneigenschaften wie z. B. die optischen Eigenschaften, die Ausziehfähigkeit und Verschweißbarkeit unbefriedigend (vgl. DE-OS-2 558 266).

Desweiteren ist bekannt, Ethylenpolymerisate bzw. Copolymerisate von Ethylen mit ethylencopolymerisierbaren Verbindungen in einem kontinuierlich betriebenen, rohrförmigen Polymerisationssystem dadurch herzustellen, daß man dem Polymerisationssystem an dessen Einlaßstelle (A) und gleichzeitig an einer zweiten Stelle (C) hinter der Einlaßstelle entlang des Polymerisationssystems, wo die Reaktionstemperatur ein Maximum überschritten hat, ein Gemisch aus Ethylen, Sauerstoff, Regler und gegebenenfalls Comonomere zuführt, wobei man zusätzlich an einer weiteren Stelle (B) des Reaktors, an der die Temperatur der sauerstoffinitiierten Reaktion bereits das Maximum überschritten hat, und die zwischen den Einlaßstellen (A) und (C) liegt, Methylisobutylketonperoxid zudosiert. Bei diesem Verfahren wird zwar ein höherer Umsatz des Ethylens zu Polyethylen erhalten, insgesamt gesehen ist der Umsatz des Ethylens zu Polyethylen aber noch unbefriedigend (vgl. DE-OS-3 141 507).

Die Eigenschaften von Hochdruckpolyethylen hängen bekanntlichermaßen in entscheidender Weise von der Molmassenverteilung ab (vgl. P.J. Perom et al, Polymer Engineering and Science 12 (1972), (5), Seite 340). Die Molmassenverteilung hingegen wieder wird von der Anzahl an Langkettenverzweigungen beeinflußt (vgl. J.K. Bisley, Journal of American Chemical Society 75, (1953), Seiten 6123 - 6127). Langkettenverzweigung und Molmassenverteilung hängen unmittelbar mit den Polymerisationsbedingungen wie Maximaltemperatur und Druck und somit auch mit dem Umsatz zusammen (vgl. E. Luft et al, Angewandte Makromolekulare Chemie 108, (1982), Seiten 203 bis 217). Es ist hiernach bei steigendem Umsatz mit einer Verschlechterung der Folieneigenschaften, vor allem der optischen Eigenschaften, zu rechnen.

Der vorliegenden Erfindung liegt die Aufgabe zugrunde, ein Ethylenhochdruckpolymerisationsverfahren der eingangs beschriebenen Art aufzufinden, bei dem in hoher Ausbeute Ethylenpolymerisate mit guten optischen Folieneigenschaften und guter Ausziehfähigkeit der Folien erhalten werden.

Diese Aufgaben werden erfindungsgemäß dadurch gelöst, daß an der zweiten Zufuhrstelle des Polymerisationssystems die Temperatur im Polymerisationssystem im Bereich von 250 bis 270, bevorzugt 255 bis 265°C, und am Ende des Polymerisationssystems oberhalb 260°C, liegt und 0,1 bis 5, bevorzugt 0,1 bis 1 mol ppm, bezogen auf das Ethylen, Methylisobutylketonperoxid zugeführt wird.

Das Verfahren ist bevorzugt auf die Homopolymerisation von Ethylen aber auch auf die Copolymerisation des Ethylens mit anderen ethylencopolymerisierbaren Verbindungen anwendbar. Als solche kommen alle die Verbindungen in Frage, die üblicherweise unter Hochdruckbedingungen mit Ethylen in Gegenwart von Radikale bildenden Polymerisationsinitiatoren copolymerisiert werden können. Solche Verbindungen sind z. B. Vinylacetat, n-Butylacrylat, Methylacrylat, Acrylnitril, Vinylether, Acrylsäure oder Acrylamid, wobei der Anteil an Comonomeren im Copolymerisat maximal 20 Gew.-% betragen sollte. Bevorzugt sind Copolymerisate mit einem Comonomeranteil im Copolymerisat von maximal 10 Gew.-%.

Die Polymerisation des Ethylens, gegebenenfalls zusammen mit anderen Verbindungen, erfolgt bei Drücken von 500 bis 5000 bar, vorzugsweise 1500 bis 3000 bar. Die Temperaturen im Polymerisationssystem liegen zwischen 40 und 450°C, vorzugsweise zwischen 150 und 350°C. Die mittleren Verweilzeiten betragen üblicherweise 30 bis 120 Sekunden. Dabei ist die mittlere Verweilzeit definiert durch das Verhältnis des Apparatevolumens zu dem im Mittel pro Zeiteinheit durch das Apparatevolumen hindurchgetretene Produktvolumen. Die Bedingungen im Polymerisationssystem lassen sich apparativ in sogenannten Rohrreaktoren einstellen. Unter Rohrreaktoren versteht man rohrförmige Polymerisationsgefäße, deren Längenausdehnung das über 2000fache, bevorzugt das 5000- bis 50000fache des Rohrdurchmessers beträgt. Wie üblich, wird ein Teil der Polymerisationswärme durch Kühlung des Rohrreaktors von außen mit Wasser abgeführt. Die Polymerisation des Ethylens beziehungsweise des Ethylens mit Comonomeren im Rohrreaktor wird kontinui erlich betrieben (vgl. "Ullmann's Encyklopädie der technischen Chemie", Verlag Chemie GmbH, D - 6940 Weinheim, Band 19, (1980), Seiten 169 bis 195).

Die Polymerisation des Ethylens gemäß vorliegendem Verfahren wird durch Zufuhr von Luftsauerstoff und tert.-Butylperoxypivalat initiiert, wobei die Sauerstoffkonzentration 0,5 bis 100, bevorzugt 0,5 bis 50 mol ppm, bezogen auf die Menge an Ethylen, beträgt. Das Gemisch aus Ethylen, Sauerstoff und tert.-Butylperoxypivalat, das gegebenenfalls Regler und Comonomere enthalten kann, wird an der Einlaßstelle dem Reaktor zugeführt. Unter Einlaßstelle wird im allgemeinen der Anfang des rohrförmigen Reaktors verstanden, wobei es sich bei dem erfindungsgemäß zu verwendenden rohrförmigen Reaktor um einen Einzonen-Rohrreaktor handelt.

Es ist erforderlich, daß die Konzentration des an der Reaktoreinlaßstelle zudosierten tert.-Butylperoxypivalats, das in einem inerten Lösungsmittel gelöst ist, 5 bis 15 mol ppm, vorzugsweise 7 bis 13 mol ppm, bezogen auf die gesamte, dem Polymerisationssystem zugeführte Menge Ethylen, beträgt. Die Temperatur, bei der das tert.-Butylperpivalat zudosiert wird, liegt bevorzugt im Bereich von 130 bis 160, besonders bevorzugt bei 140 bis 150°C.

Durch die üblichen Regler, zum Beispiel Kohlenwasserstoffe wie Propan, Propen usw., Ketone wie Aceton, Methylethylketon usw. oder Aldehyde wie Propionaldehyd kann das Molekulargewicht des anfallenden Polymerisats auf den gewünschten Wert gebracht werden.

In dem erfindungsgemäß verbesserten Verfahren wird nun an einer weiteren Reaktorstelle, an der das Temperaturmaximum der Polymerisationsreaktion überschritten ist, zusätzlich noch Methylisobutylketonperoxid, das in einem inerten Lösungsmittel gelöst ist, an der Reaktorstelle eingeführt, wo die Temperatur im Bereich von 250 bis maximal 270°C, vorzugsweise bei 255 bis 265°C liegt. Dabei soll die Konzentration des zusätzlich zugeführten Methylisobutylketonperoxids 0,1 bis 5 mol ppm, vorzugsweise 0,1 bis 1 mol ppm, bezogen auf die gesamte, dem Polymerisationssystem zugeführte Menge Ethylen, betragen. Es ist von Vorteil, wenn die Temperatur am Reaktorende, d. h. am Ende des rohrförmigen Reaktors, oberhalb 260°C liegt. Bevorzugt kann diese Temperatur im Bereich von 280 bis 310°C liegen.

Als geeignete inerte Lösungsmittel für das tert.-Butylperoxypivalat und das Methylisobutylketonperoxid werden zweckmäßig aliphatische Kohlenwasserstoffe wie Oktan oder Benzin verwendet. Es können gegebenenfalls auch andere inerte Lösungsmittel, wie Chlorbenzol, Cyclohexan oder Methanol, eingesetzt werden. Die für das Zuführen der Initiatoren erforderlichen Mengen an Lösungsmittel sind im Verhältnis zur Menge Ethylen gering und betragen im allgemeinen jeweils 0,01 bis 5 Gew.-%, vorzugsweise 0,1 bis 2 Gew.-%, bezogen auf die Menge Reaktionsgas. Die Initiatoren enthaltende Lösung wird dabei an den oben angegebenen Stellen, zweckmäßig mit Hilfe von schnellaufenden Dosierpumpen direkt in das Reaktionsgemisch zudosiert (vgl. DE-OS-3 227 746).

Es ist ein Vorteil des erfindungsgemäßen Verfahrens, daß bei gleichzeitig hohem Umsatz des Ethylens ein Ethylenpolymerisat der Dichte 0,910 bis 0,935, vorzugsweise 0,915 bis 0,925 g/cm3 (DIN 53 479) erhalten werden kann, das zu hohen optischen Eigenschaften und Ausziehfähigkeit der daraus hergestellten Folien führt.

In den folgenden Beispielen wird das erfindungsgemäße Verfahren näher beschrieben.

## Beispiele

Die Polymerisation wurde in allen Fällen in einem rohrförmigen Reaktor mit einem Längen-/Durchmesser-Verhältnis von etwa 15 000 durchgeführt. Zur Abführung der Polymerisationswärme wurden die Rohrwände von außen mit Wasser gekühlt. Das sauerstoffhaltige Ethylen wurde mit dem Molgewichtsregler versetzt, auf den Reaktionsdruck komprimiert und der Einlaßstelle des Reaktors zugeführt. Zusätzlich dazu wurde an der Einlaßstelle des Reaktors eine Lösung von tert.-Butylperoxypivalat in Verdünnungsmittel (Benzin) zugegeben. Nach dem Abklingen der Temperatur des Reaktionsgemisches, d. h. nach dem Temperaturmaximum der mit Sauerstoff und tert.Butylperoxypivalat initiierten Polymerisation wurde etwa in der Mitte des Reaktors an der 2. Zuführstelle dem Reaktionsgemisch eine weitere Peroxidlösung aus Methylisobutylketonperoxid in Verdünnungsmittel (Benzin) zugeführt. Dadurch bildete sich eine 2. Polymerisationszone mit einem neuen Temperaturmaximum aus. In einer Reihe von Versuchen wurde durch eine geeignete Maßnahme wie z. B. Änderung der Initiatormenge und/ oder Änderung der Vorwärmer- oder Kühlwassertemperatur die Temperatur an der 2. Zuführstelle variiert. Das erhaltene Polyethylen wurde in bekannter Weise in den dem Reaktor nachgeschalteten Abscheidern vom nicht umgesetzten Ethylen abgetrennt.

## Beispiel 1

Dem oben beschriebenen Reaktor wird bei einem Reaktionsdruck von 2 750 bar, gemessen an der Einlaßstelle des Reaktors, ein Ethylenstrom, versetzt mit 10,0 mol ppm tert.-Butylperoxypivalat und 6,1 mol ppm Luftsauerstoff, bezogen auf das Ethylen, an der Einlaßstelle zugeführt. Zusätzlich wird an einer 2. Zuführstelle etwa in der Mitte des Rohrreaktors, wo die Temperatur des Reaktionsgemisches nach dem Temperaturmaximum auf 260°C abgesunken war, 0,64 mol ppm Methylisobutylketonperoxid in verdünnter Form (Benzin), bezogen auf das Ethylen, zugeführt. Dadurch ergibt sich im 1. Teil des Reaktors ein Temperaturmaximum von 320°C und im 2. Teil des Reaktors ein Temperaturmaximum von 310°C. Die Temperatur am Auslaß des Polymerisationssystems beträgt 290°C. Als Molekulargewichtsregler wird Propionaldehyd zugesetzt. Die Reglermenge wird so bemessen, daß sich ein Molekulargewicht, entsprechend eines Schmelzindex MFI von 0,8 g/ 10 min, gemessen nach DIN 53 735, einstellt.

**Vergleichsversuch 1 gemäß DE-OS-2 558 266**

Dem Reaktor gemäß Beispiel werden bei einem Reaktionsdruck von 2 750 bar, gemessen an der Einlaßstelle des Reaktors, ein Ethylenstrom, versetzt mit 10,0 mol ppm tert.-Butylperoxypivalat, 5,6 mol ppm Di-tert.-butylperoxid in verdünnter Form (Benzin) und 7,1 mol ppm Sauerstoff, bezogen auf das Ethylen, an der Einlaßstelle zugeführt. Dabei ergibt sich ein Temperaturmaximum von 320°C. Die Temperatur am Auslaß des Reaktors beträgt 300°C.

Als Molekulargewichtsregler wird Propionaldehyd zugesetzt. Die Reglermenge wird so bemessen, daß sich ein Molekulargewicht entsprechend eines Schmelzindex MFI von 0,8 g/10 min, gemessen nach DIN 53 735, einstellt.

**Vergleichsversuch 2 nach DE-OS-3 141 507**

Die Polymerisation von Ethylen wurde in allen Versuchen in einem rohrförmigen Reaktor mit einem Längen-/Durchmesser-Verhältnis von etwa 20 000 durchgeführt. Zur Abführung der Polymerisationswärme wurden die Rohrwände von außen mit Wasser gekühlt. Das sauerstoffhaltige Ethylen wurde mit einem Molgewichtsregler versetzt und auf den Reaktionsdruck komprimiert. Von dem Reaktionsgas wurde in allen Beispielen 2 Teile der Einlaßstelle des Reaktors zugeführt und 1 Teil dem Reaktor etwa in der Mitte an einer 2. Zufuhrstelle zugegeben, nachdem sich die Reaktion in der 1. Zone mit einem Temperaturmaximum ausgebildet hatte und die Temperatur des Gemisches schon wieder am Abklingen war. Durch diese Maßnahme bilden sich 2 Reaktionszonen in dem rohrförmigen Reaktor (Zweizonen-Rohrreaktor) aus.

Dem oben beschriebenen Reaktor werden bei einem Reaktionsdruck von 2 750 bar, gemessen an der 2. Zulaufstelle, gleichzeitig 2 Ethylenströme zugeführt, wobei dem Strom in den Reaktoreinlaß 5,0 mol ppm Luftsauerstoff, bezogen auf das Ethylen, und dem Strom in die 2. Zufuhrstelle 6,6 mol ppm Luftsauerstoff, bezogen auf die Ethylenmenge, in der 2. Reaktionszone zugesetzt werden.

In der 1. Reaktionszone wird zusätzlich an einer Stelle, an der die Temperatur der sauerstoffinitiierten Polymerisation ein Temperaturmaximum von 250°C überschritten hat, eine Menge von 0,5 mol ppm Methylisobutylketonperoxid in verdünnter Form (Benzin) zudosiert, wodurch sich in der 1. Zone ein zweites Maximum mit 290°C ausbildet. In der 2. Reaktionszone wird eine Maximaltemperatur von 310°C erreicht. Als Molekulargewichtsregler wird Propionaldehyd zugesetzt. Die Reglermenge wird so bemessen, daß sich ein Molekulargewicht entsprechend eines MFI von 0,8 g/10 min einstellt.

**Tabelle**

| Versuch | Umsatz[1] | Dichte[2] | Streu[3] | Glanz[4] | ME[5] |
|---|---|---|---|---|---|
| Beispiel | 26,3 | 0,9243 | 21 | 107 | 36 |
| Vergleichsversuch 1 | 21,4 | 0,9242 | 31 | 86 | 43 |
| Vergleichsversuch 2 | 24,7 | 0,9240 | 28 | 96 | 53 |

1) Menge an Polymerisat, bezogen auf die Gesamtethylenmenge, angegeben in Gew.-%
2) Dichte des Polymerisats in $g/cm^3$ nach DIN 53 479
3) Lichtstreuung der Folie in % nach DIN 53 490, vgl. Kunststoffe, Bd. *56* (1969), S. 350 bis 354
4) Glanzwert der Folie in Skalenteilen nach DIN 67 530
5) Memory Effekt als Maß für die Strangaufweitung in %, gemessen in Apparatur nach DIN 53 735 bei konstanter Schergeschwindigkeit

Die Beispiele und Vergleichsbeispiele zeigen die unerwarteten und überraschenden Vorteile des Verfahrens auf. Wie die Tabelle veranschaulicht, kann im erfindungsgemäßen Verfahren der Reaktionsumsatz der Polymerisation deutlich angehoben werden. Gleichzeitig findet man eine Verbesserung der optischen Folieneigenschaften und der Verarbeitbarkeit des Polymerisats.

**Patentansprüche**

1. Verfahren zur Herstellung von Ethylenpolymerisaten durch Homopolymerisation von Ethylen oder Copolymerisaten von Ethylen mit Ethylen copolymerisierbaren Verbindungen in einem kontinuierlich betriebenen Polymerisationssystem, bestehend aus einem Einzonen-Rohrreaktor, bei Drücken von 500 bis 5 000 bar und Temperaturen von 40 bis 450°C in Gegenwart von radikalisch zerfallenden Polymerisationsinitiatoren, indem man dem Polymerisationssystem an dessen Einlaßstelle ein Gemisch aus Ethylen, Sauerstoff, 5 bis 15 mol ppm, bezogen auf das Ethylen, tert.-Butylperoxypivalat und gegebenenfalls Regler und gegebenenfalls Comonomer und zusätzlich an einer zweiten Stelle hinter der Einlaßstelle entlang des Polymerisationssystems, an der die Temperatur der Polymerisationsreaktion bereits das Maximum überschritten hat, einen anderen radikalisch zerfallenden Polymerisationsinitiator zuführt, *dadurch gekennzeichnet*, daß an der zweiten Zuführstelle die Temperatur im Polymerisationssystem im Bereich von 250 bis 270°C liegt und 0,1 bis 5 mol ppm, bezogen auf das Ethylen, Methylisobutylketonperoxid zugeführt wird.

2. Verfahren nach Anspruch 1, *dadurch gekennzeichnet*, daß an der zweiten Zufuhrstelle die Temperatur im Bereich von 255 bis 265°C liegt.

## EP 0 121 754 B1

3. Verfahren nach Anspruch 1, *dadurch gekennzeichnet*, daß 0,1 bis 1 mol ppm Methylisobutylketonperoxid zugeführt wird.

**Claims**

1. A process for preparing an ethylene polymer by homopolymerization of ethylene or a copolymer of ethylene with an ethylene-copolymerizable compound in a continuously operated polymerization system comprising a single-zone tube reactor at from 500 to 5 000 bar and from 40 to 450°C in the presence of a free radical polymerization initiator by supplying the polymerization system at its inlet point with a mixture of ethylene, oxygen and from 5 to 15 mol ppm, based on the ethylene, of tert-butyl peroxypivalate with or without regulator and with or without comonomer and in addition at a second point downstream of the inlet point along the polymerization system where the temperature of the polymerization reaction has already exceeded the maximum with another free radical polymerization initiator, wherein at the second feed point the temperature in the polymerization system is within the range from 250 to 270°C and from 0.1 to 5 mol ppm, based on the ethylene, of methyl isobutyl ketone peroxide are introduced.

2. A process as claimed in claim 1, wherein at the second feed point the temperature is within the range from 255 to 265°C.

3. A process as claimed in claim 1, wherein from 0.1 to 1 mol ppm of methyl isobutyl ketone peroxide is introduced.

**Revendications**

1. Procédé de préparation de polymères d'éthylène par homopolymérisation d'éthylène ou copolymérisation d'éthylène avec des composés copolymérisables avec l'éthylène dans un système de polymérisation fonctionnant en continu, comportant un réacteur tubulaire à une zone, à des pressions de 500 à 5 000 bar et des températures de 40 à 450°C, en présence d'agents d'amorçage de polymérisation à décomposition radicalaire, dans lequel on introduit dans le système de polymérisation, en son point d'entrée, un mélange d'éthylène, d'oxygène, 5 à 15 ppm en moles par rapport à l'éthylène de peroxypivalate de tert-butyle, éventuellement de régulateurs et éventuellement de comonomère, puis en un deuxième point en aval du point d'entrée le long du système de polymérisation auquel la température de la réaction de polymérisation a déjà atteint son maximum, un autre agent d'amorçage de polymérisation à décomposition radicalaire, *caractérisé* en ce que, au deuxième point d'entrée, la température dans le système de polymérisation est comprise entre 250 et 270°C et on introduit de 0,1 à 5 ppm en moles par rapport a l'éthylène de peroxyde de méthylisobutylcétone.

2. Procédé selon la revendication 1, *caractérisé* en ce que, au deuxième point d'entrée, la température est comprise entre 255 et 265°C.

3. Procédé selon la revendication 1, *caractérisé* en ce qu'on introduit de 0,1 à 1 ppm en moles de peroxyde de méthylisobutylcétone.